# EUROPÄISCHE PATENTSCHRIFT

(11) **EP 0 586 949 B1**
(45) Veröffentlichungstag und Bekanntmachung des Hinweises auf die Patenterteilung: **05.11.1997**
(21) Anmeldenummer: 93113302.9
(22) Anmeldetag: 20.08.1993
(51) Int. Cl.: F16K 1/00, F15B 13/042, F16K 11/065

(54) **Hydraulisches Ventil**
Hydraulic valve
Clapet hydraulique

(30) Priorität: 31.08.1992 DE 4228945
(43) Veröffentlichungstag der Anmeldung: 16.03.1994
(73) Patentinhaber: Saarberg Hydraulik GmbH, 66540 Neunkirchen-Heinitz (DE)
(72) Erfinder: Ecker, Felix, D-66583 Spiesen-Elversberg (DE); Mateja, Ernst, D-66538 Neunkirchen (DE)
(74) Vertreter: Bernhardt, Winfrid, Dr.-Ing.

(56) Entgegenhaltungen:
- EP-A- 0 257 539
- DE-A- 2 425 139
- DE-A- 3 732 175
- DE-B- 2 314 702
- US-A- 4 330 012

## Beschreibung

Die Erfindung betrifft ein hydraulisches Ventil mit einer in einem Ventilgehäuse angeordneten Hülse von abschnittweise zylindrischem Innenumfang und einem axial relativ-beweglich darin angeordneten Kolben von abschnittweise zylindrischem Außenumfang, wobei in dem Kolben ein hydraulischer Druckraum angeordnet ist, der an dem Außenumfang des Kolbens neben einer zylindrischen Dichtfläche einen Auslaß aufweist und dem in der Hülse eine Weiterführung zugeordnet ist, die in Schließstellung durch einen an der Hülse in einer Ringnut sitzenden Dichtring oder eine zylindrische Gegendichtfläche, der bzw. die an der genannten Dichtfläche anliegt, von dem Auslaß getrennt ist und in Öffnungsstellung, in der der Dichtring bzw. die Gegendichtfläche sich auf der anderen Seite des Auslasses befindet, an den Auslaß anschließt.

Ventile dieser Konstruktion sind in der DE 37 32 175 A1 vorgeschlagen. Die allgemeine Bauart, mit oder ohne die Hülse, ist vielfältig bekannt unter der Bezeichnung "Kolbenschieberventile".
In der Ölhydraulik läßt man die Passung zwischen der Dichtfläche des Kolbens und der, im Ventilgehäuse ausgebildeten, Gegendichtfläche genügen; der Auslaß kann eine ringförmige Ausnehmung beliebiger axialer Länge sein.
In der Wasser- und der Emulsionshydraulik bedarf es wegen der geringeren Viskosität des Hydraulikmediums eines Dichtringes. In diesem Falle muß man den Auslaß des Druckraumes auf eine Reihe von Löchern beschränken oder auf einen schmalen Spalt. Ein solcher ist in der EP 0 257 539 B1 beschrieben.
Gleichviel ob der Kolben durch den Druckraum und Auslässe dieser oder jener Art im Querschnitt vermindert ist oder ob er durch Kerbwirkung geschwächt ist, ist er bei seinen, meist hydraulisch bewirkten, schnellen Verschiebungen gegen Anschlag bruchgefährdet. Das begrenzt auch die Möglichkeiten, ihn platzsparend mit großen Leitungsquerschnitten und kleinem Metallquerschnitt auszubilden.

Aus der DE-A-24 25 139 ist eine Absperr-Armatur für eine trennbare Verbindung von Rohrleitungen zum Transport von Medien bekannt, beispielsweise zum Verpumpen von Öl an einer Schiffsverladeanlage. Die Rohrleitung wird in der Armatur fortgesetzt durch ein kurzes Rohrstück, das am Ende verschlossen ist und vor dem Verschluß ringsum am Umfang radiale Öffnungen aufweist. Das Medium fließt durch die Öffnungen in ein das Rohrstück umgebendes Gehäuse. Die Leitungsverbindung ist verwirklicht, indem eine gleiche Armatur umgekehrt angesetzt ist. Das Medium strömt weiter in deren Gehäuse und hier durch die radialen Öffnungen in das Rohrstück hinein und dann wieder weiter in einer Leitung. Die radialen Öffnungen können in jeder Armatur verschlossen werden durch eine Hülse, die verschiebbar auf dem Rohrstück angeordnet ist. Für die Verschiebung ist an der Hülse ein zwischen dem Rohrstück und dem zylindrischen Gehäuse wirksamer Kolben angeformt. Er kann auf seinen beiden Seiten durch in das Gehäuse eingeleitetes Druckmittel beaufschlagt werden.
Nach dem Verschließen der radialen Öffnungen zumindest auf der Pumpenseite kann die Leitungsverbindung getrennt werden. Das zu transportierende Medium steht von der Pumpenseite her weiter bis zu der Leitungsverbindung an.

Der Erfindung liegt die Aufgabe zugrunde, die Bruchgefährdung des Kolbens eines Ventils der eingangs genannten Art zu vermindern. Zugleich soll der Durchfluß des Ventils gesteigert werden.

Gemäß der Erfindung wird dieser Zweck ausgehend von einem hydraulischen Ventil der eingangs genannten Art dadurch erfüllt, daß der Kolben unbeweglich und die Hülse auf dem Kolben und in dem Ventilgehäuse verschiebbar ist,
wobei der Kolben einen pumpenseitigen zylindrischen Endabschnitt mit mindestens einem von der Stirnseite des Kolbens ausgehenden und in den Druckraum ausmündenden Kanal, im Anschluß an diesen Endabschnitt den Druckraum und Auslaß, im Anschluß an den Auslaß die genannte zylindrische Dichtfläche, im Anschluß an die zylindrische Dichtfläche eine weitere ringförmige Ausnehmung und im Anschluß an diese einen verbraucherseitigen zylindrischen Endabschnitt aufweist mit von der ringförmigen Ausnehmung auf die verbraucherseitigen Stirnseite des Kolbens führenden Kanälen,
und wobei die genannte Weiterführung in einer ringförmigen Ausnehmung oder, im Falle eines größeren Durchmessers des Endabschnittes als ihn die genannte zylindrische Dichtfläche hat, nur in einem Absatz am Innenumfang der Hülse als um die genannte zylindrische Dichtfläche herumführende, in die weitere ringförmige Ausnehmung des Kolbens und in die Kanäle des verbraucherseitigen Endabschnittes hinein überleitende Umlenkung besteht.

Die bisher aus konstruktiven und Herstellungsgründen eingesetzte Hülse kann, aus einem weniger spröden Material als der Kolben, bei ihrem größeren Durchmesser mit genügendem Metallquerschnitt hergestellt werden, um die erforderliche Schlagfestigkeit aufzubringen. Sie kann aus Messing bestehen, während für den Kolben gehärteter, nichtrostender Stahl erforderlich ist. Darüber hinaus hat man bei der Hülse eher die Möglichkeit einer Gestaltung, die ihre Schlagbelastung verringert, etwa mit einem zwischen zwei Anschlägen bewegten Bund o. dgl. .
Die Ausbildung im Ganzen führt zu einem auch sonst besonders vorteilhaften Gegenstand, nämlich einem mit nur geringfügiger Umlenkung im ganzen geradlinig axial durchströmten Schieberventil.
Dieses Ventil verursacht nur geringe Druckverluste. Es ermöglicht schnelleren und damit größeren Durchfluß.
Zur Erhöhung des Durchflusses trägt ferner bei, daß in dem mechanisch nicht belasteten Kolben die Kanäle einen verhältnismäßig großen Anteil des Querschnitts einnehmen können.

Nach einer weiteren vorteilhaften Ausgestaltung ist die Hülse mit radialen Durchlässen versehen, die mindestens in einer Stellung der Hülse von einer in dem Gehäuse ausgebildeten und mit einem Anschluß, insbesondere einem Rücklaufanschluß, verbundenen Ringraum umgeben sind. Die weitere ringförmige Ausnehmung des Kolbens und der in dem Ventilgehäuse ausgebildete Ringraum liegen dabei vorzugsweise etwa in gleicher Ebene, und die Stellung der Hülse, in der deren Durchlässe gleichfalls in diese Ebene fallen, ist die weiter vorne genannte Schließstellung. Damit ist das Ventil, wenn es zwischen Pumpe und Verbraucher schließt, z.B. nach Rücklauf geöffnet.
In der weiter vorne genannten Öffnungsstellung sind die Durchlässe vorzugsweise von dem Ringraum getrennt durch einen an dem Ventilgehäuse in einer Ringnut sitzenden Dichtring oder eine zylindrische Gegenfläche, der bzw. die an einer zylindrischen Dichtfläche der Hülse anliegt. Damit ist in der Öffnungsstellung des Ventils der Rücklauf geschlossen.

In der Regel wird die Hülse als hydraulischer Ringkolben ausgebildet und angeordnet sein und hydraulisch verschiebbar sein.
Vorzugsweise ist sie als hydraulischer Stufenkolben ausgebildet und durch auf ihrer kleinen Kolbenfläche ständig anliegendes Hydraulikmedium, vorzugsweise ferner eine Druckfeder, in ihrer einen Endstellung, vorzugsweise der Schließstellung, gehalten und durch gesteuerte Beaufschlagung ihrer größeren Kolbenfläche mit dem Hydraulikmedium in ihre andere Endstellung verschiebbar. Dies ist eine einfache und sichere Konstruktion und Funktion.
Der im Durchmesser größere Teil des Stufenkolbens kann zugleich als der erwähnte Bund o. dgl. dienen.

Folgende weitere Gestaltungen und Kombinationen werden als zweckmäßig und vorteilhaft vorgeschlagen:

Die kleinere Kolbenfläche der als Stufenkolben ausgebildeten Hülse ist von dem vom pumpenseitigen Anschluß des Ventils her anliegenden Hydraulikmedium beaufschlagt einfach infolge eines hier unabgedichteten Sitzes des Kolbens im Ventilgehäuse und/oder durch eine radiale Stichbohrung zu einem der achsparallelen Kanäle.

Der in dem Ventilgehäuse ausgebildete Ringraum ist zugleich der Bewegungsraum für die Stufe des Stufenkolbens.

Der Kolben ist axial durch das Ventilgehäuse und radial durch die Hülse gelagert. Die radiale Lagerung durch die Hülse erspart jeglichen Aufwand für eine zueinander paßgenaue Anordnung von Hülse und Kolben und verbessert die Dichtung zwischen diesen Teilen.

Die Zeichnungen geben ein Ausführungsbeispiel der Erfindung wieder.
- Fig. 1: zeigt einen axialen Schnitt durch ein hydraulisches Ventil,
- Fig. 2: zeigt das Ventil in demselben Schnitt links in Öffnungsstellung und rechts in Schließstellung jeweils mit eingezeichnetem Strömungsweg.

In einem Klotz 1 ist eine Ausnehmung 2 gebohrt bzw. gefräst, in der ein Ventil 3 eingerichtet ist. Der Klotz 1 ist zusammengeschraubt mit zwei weiteren Klötzen 4 und 5. Der Klotz 4 enthält als Bohrungen eine Pumpenanschlußleitung P und eine Rücklaufleitung R, der Klotz 5 weist einen Steck-O-Anschluß 6 für einen zu einem Verbraucher A führenden Hydraulikschlauch auf. Die Anordnungen sind doppelt vorhanden. Das zweite, nicht gezeichnete Ventil ist für einen Verbraucher B bestimmt. A und B sind beispielsweise die beiden Zylinderräume auf den verschiedenen Kolbenseiten eines Arbeitszylinders im Grubenausbau.

Die Ausnehmung 2 hat die Form eines gestuften Zylinders mit einem unteren Abschnitt kleineren Durchmessers und einem oberen Abschnitt größeren Durchmessers. Darin ist eine entsprechend als Stufenkolben ausgebildete Hülse 7 angeordnet.

Eine Öffnung 8 im Boden der Ausnehmung 2 schließt unter Abdichtung durch einen zwischengelegten O-Ring 9 an eine Verbindungsbohrung 10 zu der Pumpenanschlußleitung P an. Am oberen Ende sitzt in einer Erweiterung der Ausnehmung 2 ein ringförmiger Deckel 11. In der Hülse 7 und dem ringförmigen Deckel 11, die mit gleichem Innendurchmesser bündig aneinanderschließen, sitzt ein zwischen dem Boden der Ausnehmung 2 und dem Klotz 5 axial gehaltener Kolben 12.

Der Kolben 12 weist einen pumpenseitigen zylindrischen Endabschnitt 13, einen mittleren zylindrischen Abschnitt 14 und einen verbraucherseitigen zylindrischen Endabschnitt 15 auf. Zwischen dem pumpenseitigen Endabschnitt 13 und dem mittleren Abschnitt 14, die beide gleichen Durchmesser haben, ist ein schmaler Spalt, einen Druckraum bildender 16 eingeschnitten. Der offene Umfang des Spaltes 16 bildet einen Auslaß 16a. Zwischen dem mittleren Abschnitt 14 und dem verbraucherseitigen Endabschnitt 15 ist eine flachere und breitere ringförmige Ausnehmung 17 geformt.
Durch den pumpenseitigen zylindrischen Endabschnitt 13 erstrecken sich beispielsweise acht in dem Spalt 16 ausmündende Bohrungen 18. In gleicher Weise führen Bohrungen 19 größeren Durchmessers von der ringförmigen Ausnehmung 17 aus durch den verbraucherseitigen zylindrischen Endabschnitt 15. Sie liegen in diesem, der einen größeren Durchmesser als der Endabschnitt 13 hat, weiter außen.

Die Hülse 7 ist, wie schon gesagt, als Stufenkolben der gestuften Ausnehmung 2 angepaßt. Innen ist sie, gleichfalls gestuft, dem Kolben 12 angepaßt. Die Innenstufe der Hülse 7 ist mit 40 bezeichnet. Mit einem weiteren Abschnitt ihres Innenumfangs liegt die Hülse einerseits an dem verbraucherseitigen zylindrischen Endabschnitt 15 an, mit einem engeren Abschnitt ihres Umfangs andererseits an dem mittleren zylinderischen Abschnitt 14 und dem pumpenseitigen zylindrischen Endabschnitt 13. Dazwischen ist sie durch einen Spalt 20, der mit einer Reihe von Stegen 21 überbrückt ist, unterbrochen.

An einem innen an der Hülse 7 ausgebildeten Absatz greift eine andererseits am Boden der Ausnehmung 2 abgestützte Druckfeder 22 an.
Zu dem zylindrischen Endabschnitt 15 hin und gegenüber zur Gehäusewand hin ist die Hülse 7 durch in sie eingelegte O-Ringe 23 bzw. 24 abgedichtet. Zu dem mittleren zylinderischen Abschnitt 14 und dem zylindrischen Endabschnitt 13 hin ist die Hülse 7 durch einen in sie eingelegten O-Ring 25 abgedichtet. Gegenüber auf der Außenseite sind zur Abdichtung zwei O-Ringe 26 und 27 in Nuten der Gehäusewandung eingelegt.
O-Ringe 28 und 29 dichten den ringförmigen Deckel 11 nach den beiden Seiten ab. Axial nach außen ist der Deckel durch einen O-Ring 30 in einer Nut des Klotzes 5, der im übrigen den Deckel 11 hält, abgedichtet. Die O-Ringe 28 bis 30 stellen somit die Abdichtung der Ausnehmung 2 im ganzen dar.

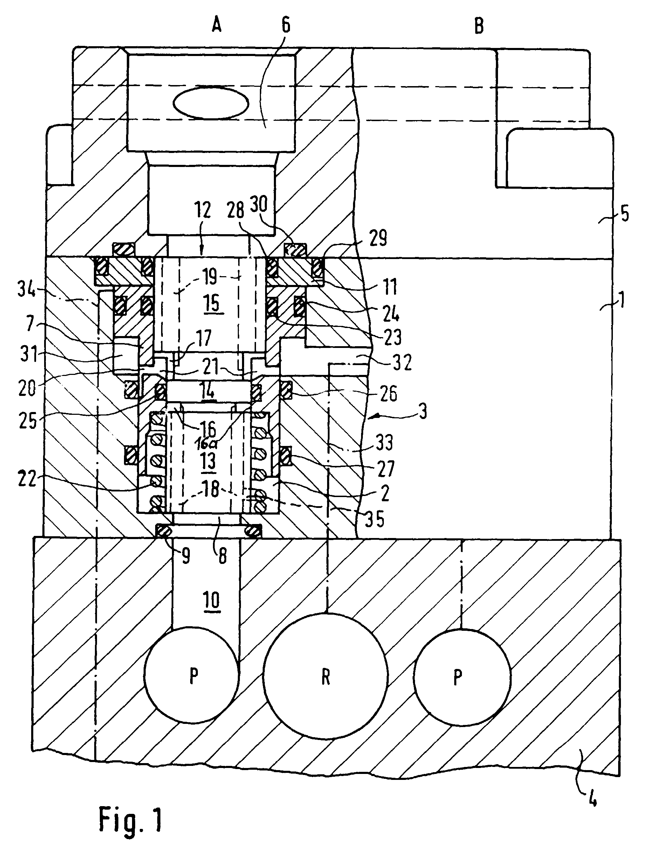

Der in der Schließstellung gemäß Fig. 1 freiliegende Ringraum innerhalb der Ausnehmung 2 ist mit 31 bezeichnet. Er ist durch eine Bohrung 32 und eine nur strichpunktiert angedeutete weitere Bohrung 33 mit der Rücklaufleitung R verbunden.

Eine gleichfalls nur strichpunktiert gezeichnete, in den Klötzen 1 und 4 gebohrte Steuerimpulsleitung 34 führt zwischen die Hülse 7 und den Deckel 11.

In der in Fig. 1 gezeichneten Schließstellung liegt der O-Ring 25 an dem mittleren zylindrischen Abschnitt 14 des Kolbens 12 an. Der aus der Pumpenanschlußleitung P über die Verbindungsbohrung 10, die Öffnung 8, die Bohrungen 18 und den Spalt 16 anstehende hydraulische Druck endet hier.

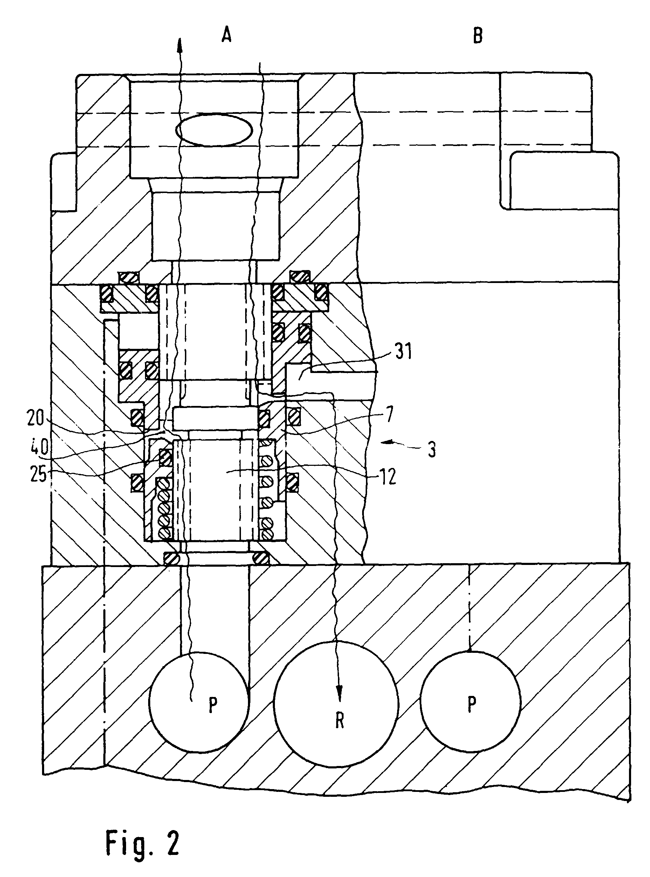

Da zwischen dem zylindrischen Endabschnitt 13 und dem Boden der Ausnehmung 2 nicht abgedichtet ist, ist die Unterseite der Hülse 7 zusätzlich zu der Kraft der Druckfeder 22 immer als Ringkolbenfläche mit dem vollen Pumpendruck beaufschlagt, auch in der Öffnungsstellung gemäß Fig. 2 links. Eine Stichbohrung 35 zu einer der Bohrungen 18 kann hinzukommen.
Zur Verschiebung der Hülse 7 in die Öffnungsstellung des Ventils wird über die Steuerimpulsleitung 34 der Pumpendruck auf die obere, größere Ringkolbenfläche der Hülse 7 gegeben. Bei der dann folgenden Verschiebung der Hülse 7 geht der O-Ring 25 über den Spalt 16 hinweg und legt sich auf dessen anderer Seite an den zylindrischen Endabschnitt 13 an.
Gleichzeitig bewegt sich der Spalt 20 der Hülse über den O-Ring 26 hinweg, so daß dieser oberhalb des Spaltes 20 dicht an der Hülse anliegt und der Spalt 20 zwischen den O-Ringen 26 und 27 eingeschlossen und damit verschlossen ist.

Wie die Schlangenlinie in Fig. 2 links zeigt, tritt nun das Hydraulikmedium an dem Spalt 16 aus, wird über der abgeschrägten Innenstufe 40 der Hülse 7 umgelenkt und axial weitergeführt und gelangt nach einer nur geringfügigen erneuten Umlenkung nach innen teilweise in die ringförmige Ausnehmung 17 hinein und schließlich in die Bohrungen 19, an deren Ende es dann in den Steck-O-Anschluß 6 austritt. Der größere Durchmesser des zylindrischen Endabschnitts 15 gegenüber dem mittleren zylindrischen Abschnitt 14 und die damit ermöglichte Lage der Bohrungen 19 weiter außen als die Bohrungen 18 sowie die größere axiale Länge der ringförmigen Ausnehmung 17 im Vergleich mit dem Spalt 16 glätten die erneute Umlenkung nach innen und in die Bohrungen 19 hinein aus.

Die rechte Schlangenlinie in Fig. 2 zeigt, wie gleichzeitig in dem weiter vorne erwähnten zweiten Ventil das Druckmedium aus dem Verbraucher B in die Rücklaufleitung R zurückfließen kann. Es strömt durch die Kanäle 19 in die ringförmige Ausnehmung 17 des Kolbens 12 und in die Hülse 7 hinein, zwischen den Stegen 21 durch den Spalt 20 hindurch aus der Hülse heraus und in den weiter oben erwähnten Ringraum 31 innerhalb der Ausnehmung 2 und schließlich von dort durch die Bohrungen 32, 33 in die Rücklaufleitung.
Auch hier ermöglicht das Ventil, trotz der stärkeren Umlenkungen, dank der verhältnismäßig großen für die Bohrungen 19 möglichen Querschnitte große Durchflußmengen. Es kann also vergleichsweise klein gebaut werden. Darüber hinaus ist es einfach und dementsprechend billig; die Dichtringe 25-27 dienen beispielsweise der Strömungslenkung und der Kolbenfunktion der Hülse 7 zugleich.

## Patentansprüche

1. Hydraulisches Ventil (3) mit einer in einem Ventilgehäuse (1) angeordneten Hülse (7) von abschnittweise zylindrischem Innenumfang und einem axial relativbeweglich darin angeordneten Kolben (12) von abschnittweise zylindrischem Außenumfang, wobei in dem Kolben (12) ein hydraulischer Druckraum (16) angeordnet ist, der an dem Außenumfang des Kolbens (12) neben einer zylindrischen Dichtfläche (14) einen Auslaß (16a) aufweist und dem in der Hülse (7) eine Weiterführung (40) zugeordnet ist, die in Schließstellung durch einen an der Hülse (7) in einer Ringnut sitzenden Dichtring (25) oder eine zylindrische Gegendichtfläche, der bzw. die an der genannten Dichtfläche (14) anliegt, von dem Auslaß (16a) getrennt ist und in Öffnungsstellung, in der der Dichtring (25) bzw. die Gegendichtfläche sich auf der anderen Seite des Auslasses (16a) befindet, an den Auslaß (16a) anschließt,
dadurch gekennzeichnet,
daß der Kolben (12) unbeweglich und die Hülse (7) auf dem Kolben (12) und in dem Ventilgehäuse (1) verschiebbar ist,
wobei der Kolben (12) einen pumpenseitigen zylindrischen Endabschnitt (13) mit mindestens einem von der Stirnseite des Kolbens (12) ausgehenden und in den Druckraum (16) ausmündenden Kanal (18), im Anschluß an diesen Endabschnitt (13) den Druckraum (16) und Auslaß (16a), im Anschluß an den Auslaß (16a) die genannte zylindrische Dichtfläche (14), im Anschluß an die zylindrische Dichtfläche (14) eine weitere ringförmige Ausnehmung (17) und im Anschluß an diese einen verbraucherseitigen zylindrischen Endabschnitt (15) aufweist mit von der ringförmigen Ausnehmung (17) auf die verbraucherseitige Stirnseite des Kolbens (12) führenden Kanälen (19),
und wobei die genannte Weiterführung (40) in einer ringförmigen Ausnehmung oder, im Falle eines größeren Durchmessers des Endabschnittes (15) als ihn die genannte zylindrische Dichtfläche (14) hat, nur in einem Absatz (40) am Innenumfang der Hülse (7) als um die genannte zylindrische Dichtfläche (14) herumführende, in die weitere ringförmige Ausnehmung (17) des Kolbens und in die Kanäle (19) des verbraucherseitigen Endabschnittes (15) hinein überleitende Umlenkung besteht.

2. Ventil nach Anspruch 1,
dadurch gekennzeichnet,
daß ein Kranz achsparalleler Kanäle (18) von der pumpenseitigen Stirnseite des Kolbens (12) ausgeht und in den Druckraum (16) ausmündet.

3. Ventil nach Anspruch 1 oder 2,
dadurch gekennzeichnet,
daß der Druckraum (16) und der Auslaß (16a) zusammen die Form eines Ringspaltes haben.

4. Ventil nach einem der Ansprüche 1 bis 3,
dadurch gekennzeichnet,
daß die Hülse (7) mit radialen Durchlässen (20,21) versehen ist, die mindestens in einer Stellung der Hülse (7) von einem in dem Gehäuse (1) ausgebildeten und mit einem Anschluß (33,34), insbesondere einem Rücklaufanschluß (32,31), verbundenen Ringraum (31) umgeben sind.

5. Ventil nach Anspruch 4,
dadurch gekennzeichnet,
daß die weitere ringförmige Ausnehmung (17) des Kolbens (12) und der in dem Ventilgehäuse (1) ausgebildete Ringraum (31) in gleicher Ebene liegen und die Stellung der Hülse (7), in der deren Durchlässe (20,21) gleichfalls in diese Ebene fallen, die Schließstellung ist.

6. Ventil nach Anspruch 4 oder 5,
dadurch gekennzeichnet,
daß in der in Anspruch 1 genannten Öffnungsstellung die Durchlässe (20,21) von dem Ringraum (31) getrennt sind durch einen an dem Ventilgehäuse (1) in einer Ringnut sitzenden Dichtring (26) bzw. eine zylindrische Gegenfläche, der bzw. die an einer zylindrischen Dichtfläche der Hülse (7) anliegt.

7. Ventil nach einem der Ansprüche 1 bis 6,
dadurch gekennzeichnet,
daß der Kolben (12) axial durch das Ventilgehäuse (1,5) und radial durch die Hülse (7) gelagert ist.

8. Ventil nach einem der Ansprüche 1 bis 7,
dadurch gekennzeichnet,
daß die Hülse (7) als hydraulischer Ringkolben ausgebildet und angeordnet ist und hydraulisch (34) verschiebbar ist.

9. Ventil nach Anspruch 8,
dadurch gekennzeichnet,
daß die Hülse (7) als hydraulischer Stufenkolben ausgebildet ist und durch auf ihrer kleineren Kolbenfläche ständig anliegendes Hydraulikmedium, vorzugsweise ferner eine Druckfeder (22), in ihrer einen Endstellung vorzugsweise der Schließstellung, gehalten ist und durch gesteuerte Beaufschlagung (34) ihrer größeren Kolbenfläche mit dem Hydraulikmedium in ihre andere Endstellung verschiebbar ist.

10. Ventil nach Anspruch 9,
dadurch gekennzeichnet,
daß die kleinere Kolbenfläche von dem vom pumpenseitigen Anschluß (8) des Ventils (3) her anliegenden Hydraulikmedium beaufschlagt ist, vorzugsweise infolge hier unabgedichteten Sitzes des Kolbens (12) im Ventilgehäuse (1) und/oder durch mindestens eine radiale Stichhohrung (35) zu einem der achsparallelen Kanäle (18).

11. Ventil nach einem der Ansprüche 4 bis 8 und Anspruch 9 oder 10,
dadurch gekennzeichnet,
daß der genannte Ringraum (31) der Bewegungsraum für die Stufe des Stufenkolbens (7) ist.

## Claims

1. Hydraulic valve (3) having a sleeve (7), which is arranged in a valve housing (1) and has a partly cylindrical inner circumference, and a piston (12), which is arranged capable of moving relatively in axial fashion therein and has a partly cylindrical outer circumference, there being arranged in the piston (12) a hydraulic pressure chamber (16) which has an outlet (16a) on the outer circumference of the piston (12) next to a cylindrical sealing surface (14) and to which there is assigned in the sleeve (7) an extension (40) which is separated from the outlet (16a) in the closed position by a sealing ring (25) seated in an annular groove on the sleeve (7) or by a cylindrical mating sealing surface, which ring or surface bears against the said sealing surface (14), and adjoins the outlet (16a) in the open position, in which the sealing ring (25) or the mating sealing surface is located on the other side of the outlet (16a), characterized in that the piston (12) is immovable and the sleeve (7) can be displaced on the piston (12) and in the valve housing (1), it being the case that the piston (12) has a pump-side cylindrical end section (13) with at least one channel (18) emanating from the end face of the piston (12) and opening into the pressure chamber (16), adjacent to this end section (13) has the pressure chamber (16) and outlet (16a), adjacent to the outlet (16a) has the said cylindrical sealing surface (14), adjacent to the cylindrical sealing surface (14) has a further annular cutout (17), and adjacent thereto has a consumer-side cylindrical end section (15) having channels (19) leading from the annular cutout (17) onto the consumer-side end face of the piston (12), and it being the case that the said extension (40) comprises an annular cutout or, in the case when the end section (15) has a larger diameter than the said cylindrical sealing surface (14), comprises only a step (40) on the inner circumference of the sleeve (7) in the form of a baffle which leads around the said cylindrical sealing surface (14) and leads into the further annular cutout (17) of the piston and into the channels (19) of the consumer-side end section (15).

2. Valve according to Claim 1, characterized in that a rim of axially parallel channels (18) emanates from the pump-side end face of the piston (12) and opens into the pressure chamber (16).

3. Valve according to Claim 1 or 2, characterized in that the pressure chamber (16) and the outlet (16a) together have the form of an annular gap.

4. Valve according to one of Claims 1 to 3, characterized in that the sleeve (7) is provided with radial passages (20, 21) which, at least in one position of the sleeve (7), are surrounded by an annular chamber (31) which is constructed in the housing (1) and connected to a port (33, 34), in particular a return port (32, 31).

5. Valve according to Claim 4, characterized in that the further annular cutout (17) of the piston (12) and the annular chamber (31) constructed in the valve housing (1) lie in the same plane, and the position of the sleeve (7) in which its passages (20, 21) likewise fall into this plane is the closed position.

6. Valve according to Claim 4 or 5, characterized in that in the open position named in Claim 1, the passages (20, 21) are separated from the annular chamber (31) by a sealing ring (26) seated in an annular groove on the valve housing (1) or by a cylindrical mating surface, which ring or surface bears against a cylindrical sealing surface of the sleeve (7).

7. Valve according to one of Claims 1 to 6, characterized in that the piston (12) is supported axially by the valve housing (1, 5) and radially by the sleeve (7).

8. Valve according to one of Claims 1 to 7, characterized in that the sleeve (7) is constructed and arranged as a hydraulic annular piston and can be displaced hydraulically (34).

9. Valve according to Claim 8, characterized in that the sleeve (7) is constructed as a hydraulic stepped piston and is held in one of its end positions, preferably the closed position, by a hydraulic medium, bearing constantly against its smaller piston surface, preferably also by a compression spring (22), and can be displaced into its other end position by controlled application (34) of the hydraulic medium to its larger piston surface.

10. Valve according to Claim 9, characterized in that the hydraulic medium present from the pump-side port (8) of the valve (3) is applied to the smaller piston surface, preferably as a result here of non-sealed seating of the piston (12) in the valve housing (1) and/or by means of at least one radial branch bore (35) to one of the axially parallel channels (18).

11. Valve according to one of Claims 4 to 8 and Claim 9 or 10, characterized in that the said annular chamber (31) is the motion space for the step of the stepped piston (7).

## Revendications

1. Vanne hydraulique (3) comportant une douille (7) qui est agencée dans le carter de vanne (1) et qui présente une surface intérieure cylindrique par tronçons, ainsi qu'un piston (12) déplaçable axialement dans et par rapport à celle-ci, qui présente une enveloppe extérieure cylindrique par tronçons, une chambre de pression cylindrique (16) étant agencée dans ledit piston (12) et présentant, à l'enveloppe extérieure du piston (12), à proximité d'une surface d'étanchification cylindrique (14), un orifice de sortie (16a) et étant associée à une extension (40) dans la douille (7) qui en position de fermeture est séparée du orifice de sortie (16a) par une bague d'étanchéité (25) placée dans une rainure annulaire pratiqué dans la douille (7) et s'appuyant contre ladite surface d'étanchification (14), ou par une contre-surface d'étanchification, et qui, en position d'ouverture dans laquelle la bague d'étanchéité (25) ou la contre-surface se trouve de l'autre côté de l'orifice de sortie (16a), se raccorde à l'orifice de sortie (16a),
caractérisé en ce
que le piston est fixe et la douille (7) se déplace sur le piston (12), dans le carter de la vanne (1),
le piston (12), comportant un tronçon d'extrémité cylindrique (13) du côté pompe, équipé d'au moins un canal (18) qui s'étend de la face frontale du piston (12) et qui débouche dans la chambre de pression (16), ledit tronçon cylindrique (13) étant suivi de la chambre de pression (16) et du orifice de sortie (16a), celui-ci étant suivie de ladite surface d'étanchification cylindrique (14), cette dernière étant suivie d'un autre évidement annulaire (17) et celui-ci étant suivi d'un tronçon d'extrémité cylindrique (15) du côté récepteur, qui est équipé de canaux (19) qui mènent de l'évidement annulaire (17) à la face frontale côté récepteur du piston (12), et ladite extension (40) consistant en un évidement annulaire ou bien, dans le cas où le tronçon d'extrémité (15) présente un diamètre plus élevé que celui de ladite surface d'étanchification cylindrique (14), seulement en un épaulement (40) pratiqué dans la surface intérieure de la douille (7), sert de dérivation menant autour de ladite surface d'étanchification cylindrique (14) et dans l'évidement annulaire (17) du piston ainsi que dans les canaux (19) du tronçon d'extrémité (15) du côté récepteur.

2. Vanne selon la revendication 1
caractérisé en ce qu'une couronne de canaux à axes parallèles (18) partde la face frontale côté pompe du piston (12) et débouche dans la chambre de pression (16).

3. Vanne selon la revendication 1 ou 2
caractérisé en ce que la chambre de pression (16)et l'orifice de sortie (16a) ont ensemble la forme d'une fente annulaire.

4. Vanne selon l'une des revendications 1 à 3
caractérisé en ce que la douille (7) est munie de perçages radiaux (20,21) qui sont entourés, en au moins une position de la douille (7), d'un espace annulaire (31) pratiqué dans le carter (1) et relié à un raccordement (33,34), notamment un raccordement de retour (32,31).

5. Vanne selon la revendication 4
caractérisé en ce que l'évidement annulaire (17) du piston (12) et l'espace annulaire (31) pratiqué dans le carter de vanne (1) se trouvent dans un même plan et en ce que la position de la douille (7), dans laquelle ses perçages (20,21) sont également dans ce plan, est la position de fermeture.

6. Vanne selon la revendication 4 ou 5
caractérisé en ce que, dans la position d'ouverture mentionnée dans la revendication 1, les perçages (20,21) sont séparés de l'espace annulaire (31) par une bague d'étanchéité (26) placée dans une rainure annulaire pratiquée dans le carter de vanne (1), ou une contre-surface cylindrique, qui s'appuie contre une surface d'étanchification cylindrique de la douille (7).

7. Vanne selon l'une des revendications 1 à 6
caractérisé en ce que le piston (12) est maintenue axialement par le carter de vanne (1,5) et radialement par la douille (7).

8. Vanne selon l'une des revendications 1 à 7
caractérisé en ce que la douille (7) consiste en un piston annulaire hydraulique qui est agencé comme tel et qui est déplaçable hydrauliquement (34).

9. Vanne selon la revendication 8
caractérisé en ce que la douille (7) consiste en un piston différentiel hydraulique et est maintenu dans l'une de ses positions extrêmes, de préférence la position de fermeture, par de l'agent hydraulique agissant continuellement sur la plus petite des surfaces de piston, de préférence encore un ressort de compression (22), et est déplaçable vers l'autre position d'extrémité par action contrôlée (34) d'agent hydraulique sur la plus grande des surfaces de piston.

10. Vanne selon la revendication 9
caractérisé en ce que la plus petite des surfaces de piston est alimentée par de l'agent hydraulique provenant du raccord du côté pompe (8) du vanne (3), de préférence par suite du siège de piston (12) non étanchifié dans le carter de vanne (1) et/ou par au moins un perçage radial (35) vers l'un des canaux à axes parallèles (18).

11. Vanne selon l'une des revendications 4 à 8 et la revendication9 ou 10
caractérisé en ce que ledit espace annulaire (31) constitue l'espace pour le mouvement de l'épaulement du piston différentiel (7).
